# EUROPEAN PATENT SPECIFICATION

(11) **EP 0 890 381 B1**
(45) Date of publication and mention of the grant of the patent: **26.11.2003**
(21) Application number: 98305122.8
(22) Date of filing: 29.06.1998
(51) Int. Cl.: B01D 17/02

(54) **Separator for immiscible liquids**
Abscheider für unmischbare Flüssigkeiten
Séparateur pour des liquides immiscibles

(30) Priority: 07.07.1997 GB 9714205
(43) Date of publication of application: 13.01.1999
(73) Proprietor: Fatstrippa Holdings Company Limited, Dublin 2 (IE)
(72) Inventor: Fatstrippa Holdings Company Limited, Dublin 2 (IE)
(74) Representative: Sanderson, Michael John

(56) References cited:
- EP-A- 0 118 021
- EP-A- 0 328 701
- DE-A- 2 458 032
- DE-A- 3 014 204

## Description

This invention relates to a separator for immiscible liquids, and has particular, though not exclusive, application to separators for effecting continuous separation of oil and water.

Oil/water separators are well known pieces of equipment that can take a variety of different forms and are used in many industries. They have particular application in the food industry where it is necessary to remove liquid greases, fats and oils from waste water prior to the water passing to the drainage system.

More particularly, large amounts of cooking oil and dressing oil can be present on utensils, plates and other equipment after food has been prepared or eaten. Problems can be caused in drainage systems if the greases and fats solidify, or in sewage treatment systems if oil reaches the bacteria or biomass present to digest the sewerage - the biomass can be suffocated by the oil whereby the necessary treatment does not take place.

A first well-established type of separator, which is simple and cheap to use, is a grease trap in which solids accumulate for subsequent removal. However, such separators require regular emptying when full of oils or when smelling of rancid fats, and can allow oils to enter the outlet system if they are not emptied in time.

Additionally, such grease traps are not suitable for high temperature liquids, and are prone to animal fats therein solidifying if allowed to cool - they are generally too large to heat economically.

Separators incorporating grease filters are also well-established, and have the advantage of being relatively simple and able to work with high temperature liquids. However, the separators require regular emptying when full of oils or when smelling of rancid fats, and can allow oil into the outlet system if not emptied.

As with the grease trap arrangements, separators with filters therein are also generally too large to heat economically, and animal fats therein can solidify if allowed to cool, while the filters themselves are expensive to replace and require regular flushing to maintain efficiency.

It will be appreciated that the equipment currently available and so far detailed can separate oil and water on a continuous basis but normally only allows the water to be discharged continuously while the oil accumulates to be pumped, sucked or otherwise disposed of on a batch basis.

A third type of established separator incorporates a skimming wheel for removing floating grease and oil from the top of the water in a retention tank. Although oil and grease removal can be continuous and the machines are small enough to heat to prevent solidification of the fats, the machines are expensive to buy, require an electrical supply, are prone to mechanical and electrical problems, require electrical and mechanical maintenance, have a fixed discharge rate and cannot therefore handle surges in oil flow, and cannot handle floating debris.

EP-A-0 118 021 discloses a separator for continuous separation of two immiscible liquids making use of a weir plate for the heavy phase and a bell-shaped cap for withdrawal of the light phase.

It would be desirable to be able to provide a separator for immiscible liquids, for example oil and water, which overcame the problems of the known arrangements and in particular which was of relatively simple construction, cheap to install and capable of effecting continuous discharge of the two liquid constituents.

According to the present invention there is provided a separator for immiscible liquids comprising a tank, an upright weir plate within the tank extending the width of the tank from the base of the tank to terminate at a level below the top of the tank, the weir plate dividing the tank into inlet and outlet chambers, an upright control plate located in the inlet chamber and extending the width of the tank, the bottom of the control plate being located above the base of the tank to define a slot between the control plate and the base of the tank, and the top of the control plate being at or above the level of the top of the weir plate, and a top plate capping that part of the inlet chamber to the side of the control plate remote from the weir plate, said top plate having an apex within the inlet chamber positioned below the level of the top of the weir plate and in which is formed an aperture, the separator further comprising an inlet to the inlet chamber positioned at a level below the top plate, an outlet from the outlet chamber positioned at a level below the top of the weir plate, and a riser tube extending upwardly from the aperture in the top plate to a level above that of the top of the weir plate.

It will be appreciated that, with such an arrangement and on the continuous supply of a mixture of immiscible liquids such as oil and water through the inlet to fill the inlet chamber, the lighter liquid floats upwards in the heavier liquid to the top of the heavier liquid where it is contained in the inlet chamber below the top plate, the heavier liquid passing through the slot between the control plate and the base of the tank, over the top of the weir plate into the outlet chamber and through the outlet from said chamber for collection. The continuous supply of mixture to and through the separator results in the lighter liquid accumulating in the riser tube and eventually flowing therefrom continuously for collection.

In the event that there is a surge in the supply of mixture to the separator, the interface between the two liquids will rise and there will be a tendency for the heavier liquid to enter the riser tube through the aperture in the top plate.

In order to prevent this, it is preferable to provide a one-way valve in the riser tube arranged to prevent flow of the heavier liquid therethrough.

Conveniently the valve is a ball valve incorporating a float which, with lighter liquid in the riser tube, retains said riser tube open, and, with heavier liquid in the riser tube, closes said tube.

In a preferred embodiment of the invention the top plate is integral with or secured to the control plate and is of generally inverted V-shape in transverse section with the apex of the section extending upwardly and inwardly of the tank from a region adjacent the inlet to the inlet chamber of the tank to the region of integration of the top plate with the control plate.

Conveniently the aperture in the top plate is formed therein at or adjacent its region of integration with the control plate.

Preferably an outlet pipe feeds substantially horizontally from the riser tube at a level above that of the top of the weir plate.

The separator may include a coalescing filter in the inlet chamber immediately upstream of the slot between the control plate and the base of the tank.

By way of example only, an embodiment of the invention will now be described in greater detail with reference to the accompanying drawings of which:
Fig. 1 is a plan view from above of a separator according to the invention;
Fig. 2 is a section on line A-A in Fig. 1;
Fig. 3 is a section on line B-B in Fig. 1, and
Fig. 4 shows the ball valve and riser tube to a larger scale.

Referring to the drawings, the illustrated separator comprises a tank 2 of generally rectangular sections having an inlet pipe 4 feeding into one end thereof and an outlet pipe 6 feeding from the other end thereof.

A vertical weir plate 8 is located in the tank 2 towards the other end thereof to extend the full width of the tank 2 and from the bottom of the tank 2 to a level just below the top of the tank 2. The plate 8 is secured to the opposed sides of the tank 2 and to the bottom of the tank 2 to divide the tank 2 into a main inlet chamber 10 and an outlet chamber 12.

Positioned in the inlet chamber 10 is a flow control member, indicated generally at 14, including a vertical control plate 16 extending the full width of the tank 2 and having a bottom edge just above the bottom of the tank 2 to define a slot or gap 18 between the plate 16 and the bottom of the tank 2.

The control plate 16, which is secured to the opposed sides of the tank 2, extends upwardly to a position above the top of the weir plate 8, preferably to the top of the tank 2.

Integrally formed with the control plate 16, as part of the control member 14, is a top plate 20 which extends the full width of the tank 2 and from an intermediate region of the plate 16 below the level of the top of the weir plate 8 to the one end of the tank, the top plate 20 being substantially perpendicular to the control plate 16 to cap that part of the inlet chamber 10 to the side of the control plate 16 remote from the weir plate 8.

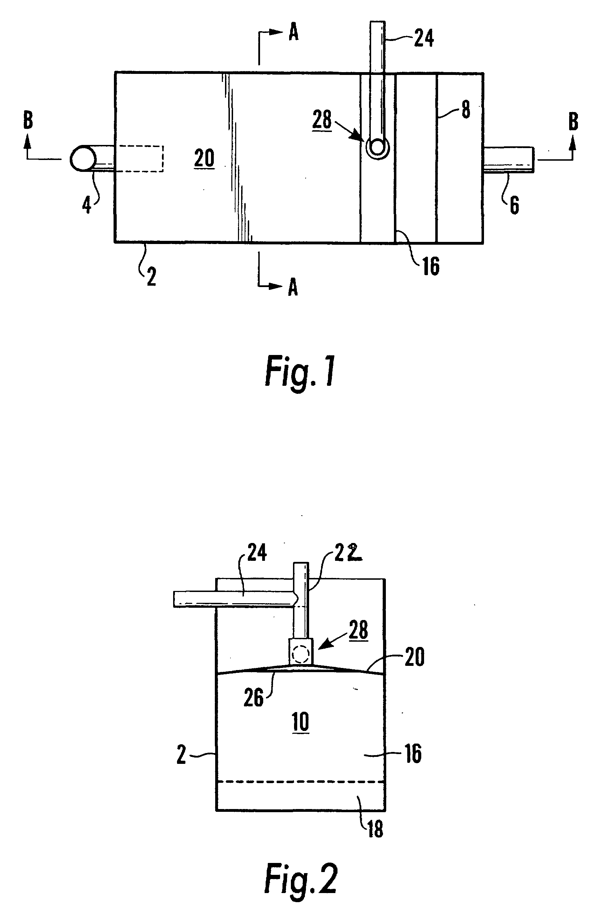

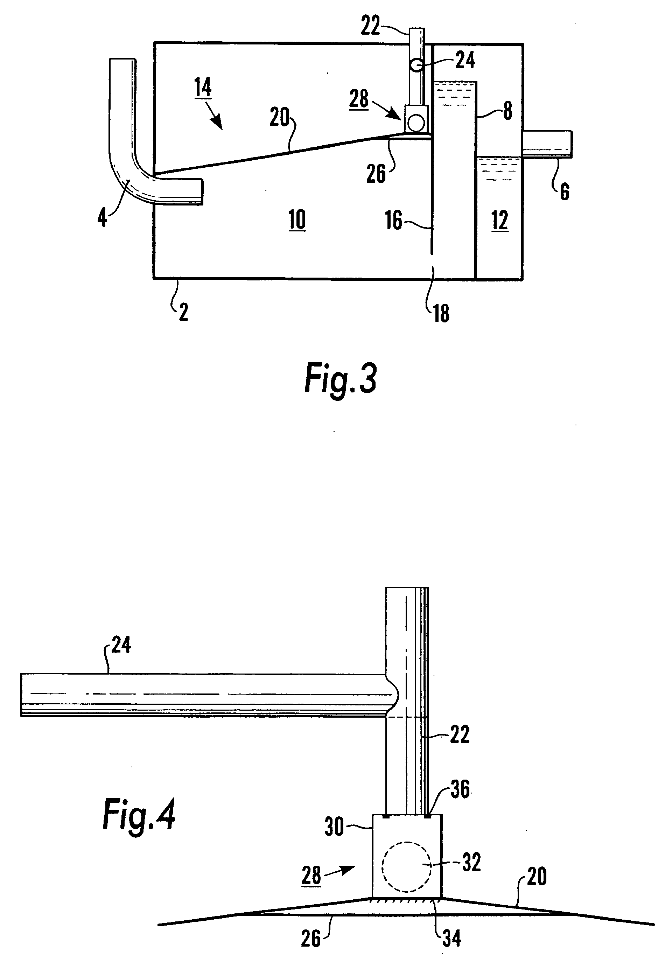

More particularly, the top plate 20 is of generally shallow V-shape in transverse section as best seen in Fig. 2 with a slightly sloping apex which extends inwardly and upwardly of the tank 2 from the one end of the tank 2 just above the inlet 4 towards the control plate 16 as best seen in Fig. 3.

An aperture is formed in the top plate 20 centrally of the.width thereof adjacent its junction with the control plate 16, which is the highest point of said top plate 20, said aperture feeding into a riser tube 22 extending upwardly from the top plate 20. A horizontal outlet tube 24 extends from the riser tube 22 at a level above that of the top of the weir plate 8.

The described separator operates as follows. A mixture of two immiscible liquids, for example oil and water, is fed through the inlet pipe 4 into the chamber 10 at a predetermined flow rate that allows time for the oil contained in the mixture to separate from the water and to float upwards to the surface of the water where it is contained below the top plate 20.

As flow continues, the oil is moved upwards along the slope of the top plate 20 towards the aperture therein, and accumulates within the riser tube 22, the oil/water interface being shown at 26 in Figs. 2 and 3.

Meanwhile, the main body of water flows through the slot 18 below the control plate 16 and thence up between the control plate 16 and the weir plate 8, over the weir plate 8 into the outlet chamber 12 and eventually out of the tank 2 through the outlet pipe 6.

The positions of the top of the weir plate 8, of the outlet tube 24 and of the outlet pipe 6 are determined in accordance with the specific gravities of the two liquids and such that, in the equilibrium position of the separator with the inlet chamber 10 full of liquid and no flow therethrough, the level of oil in the riser tube 22 is just below the level of the outlet tube 24 and the water level is at the top of the weir plate 8.

Flow of the mixture through the separator causes the level of water to rise above that of the weir plate 8 whereby said water flows into the outlet chamber 12 and thence from the outlet pipe 6 for collection.

There is also a corresponding rise in the level of oil in the riser tube 22 whereby oil reaches the level of the outlet tube 24, and flows therethrough for collection.

Thus, with constant flow through the separator and with constant separation of the oil and water, there is a continuous discharge of the separated oil and water from the outlet tube 24 and from the outlet pipe 6 respectively, the position of the interface 26 between the two constituents of the mixture remaining constant.

If there is a surge in the supply of mixture to the separator, there will be a tendency for the interface 26 between the oil and water to rise and for water to enter the riser tube 22, which must be prevented.

The separator thus includes a control valve indicated generally at 28 and positioned in the lower regions of the riser tube 22.

More particularly, the valve 28 comprises a cylindrical housing 30 the bore of which interconnects the aperture in the top plate 20 with the riser tube 22, a ball float 32 being located within the housing 30, and being such as to float in water but sink in oil.

The float 32 is retained in the housing 30 by means of a mesh sheet 34 which extends across the lower end of the housing 30 over the aperture in the top plate 32. A sealing ring 36 surrounds the outlet from the upper end of the housing 30 into the riser tube 22 whereby, when engaged by the ball float 32, flow from the housing 30 to the riser tube 22 is prevented.

It will thus be appreciated that, under normal operating conditions and with separated oil in the housing 30, the ball float 32 seats on the mesh sheet 34 and flow of oil to the riser tube 22 through the valve 28 continues.

In the event of a surge in flow and whereby water enters the housing 30, the ball float 32 rises and seals against the ring 36 to prevent flow to the riser tube 22. Thus water is prevented from being discharged from the outlet tube 24.

When the water/oil interface 26 falls again, the ball float 32 falls with it and allows oil to flow from the separator.

Thus there is provided a separator of relatively simple construction which is cheap to produce and provides continuous discharge of both separated liquids.

Clearly the precise construction of the separator can vary from that described and illustrated. For example the position of the aperture in the top plate 20 and the configuration of said plate 20 can be altered providing the separated oil is guided towards the aperture.

The separtor has application over a wide range of oil to water ratios, and it is anticipated that the unit will operate satisfactarily between less than 1% of oil up to 50% oil. It is however preferable that the oil to water ratio is such that the control valve 28 is not required to operate regularly. This can be achieved by varying the bore of the riser tube 22 in relation to the bore of the outlet pipe 6, the total cross-sections of which are of course dictated by the maximum throughput of mixture. The size of the inlet chamber 10 is dictated by the residence time required for the flotation separation of the two liquids.

In this respect, and when the temperature of the incoming mixture is above a certain value, the oil is carrid in the water as a suspension of minute globules which do not in themselves float out of suspension and which would normally therefore be carried through the separator with the water to the outlet pipe 6.

In order to prevent this, a coalescing filter can be fitted in the inlet chamber 10 immediately upstream of the slot 18. The filter coalesces the oil globules onto the surface thereof where they remain until the oil held by the filter has coalesced to form droplets of sufficient size to allow flotation to the surface of the inlet chamber 10 for discharge as detailed above.

## Claims

1. A separator for immiscible liquids comprising a tank (2) and an upright weir plate (8) within the tank (21) extending the width of the tank (2) from the base of the tank (2) to terminate at a level below the top of the tank (2), the weir plate (8) dividing the tank (2) into inlet and outlet chambers (10,12), an upright control plate (16) located in the inlet chamber (10) and extending the width of the tank (2), the bottom of the control plate (16) being located above the base of the tank (2) to define a slot (18) between the control plate (16) and the base of the tank (2), and the top of the control plate (16) being at or above the level of the top of the weir plate (8), and a top plate (20) capping that part of the inlet chamber (10) to the side of the control plate (16) remote from the weir plate (8), said top plate (20) having an apex within the inlet chamber (10) positioned below the level of the top of the weir plate (8) and in which is formed an aperture, the separator further comprising an inlet (4) to the inlet chamber (10) positioned at a level below the top plate (20), an outlet (6) from the outlet chamber (12) positioned at a level below the top of the weir plate (8), and a riser tube (22) extending upwardly from the aperture in the top plate (20) to a level above that of the top of the weir plate (8).

2. A separator as claimed in claim 1 and comprising a one-way valve (28) in the riser tube (22) arranged to prevent flow of the heavier liquid therethrough.

3. A separator as claimed in claim 2 in which the valve (28) is a ball valve incorporating a float (32) which, with lighter liquid in the riser tube (22), retains said riser tube (22) open, and, with heavier liquid in the riser tube, closes said tube (22).

4. A separator as claimed in any one of claims 1 to 3 in which the top plate (20) is integral with or secured to the control plate (16) and is of generally inverted V-shape in transverse section with the apex of the section extending upwardly and inwardly of the tank (2) from a region adjacent the inlet (4) to the inlet chamber (10) of the tank (2) to the region of integration of the top plate (20) with the control plate (16).

5. A separator as claimed in claim 4 in which the aperture in the top plate (20) is formed therein at or adjacent its region of integration with the control plate (16).

6. A separator as claimed in any one of claims 1 to 5 in which an outlet pipe (24) feeds substantially horizontally from the riser tube (22) at a level above that of the top of the weir plate (8).

7. A separator as claimed in any one of claims 1 to 6 and including a coalescing filter in the inlet chamber (10) immediately upstream of the slot (18) between the control plate (16) and the base of the tank (2).

## Patentansprüche

1. Separator für unmischbare Flüssigkeiten, umfassend einen Behälter (2) und eine aufrechte Wehrplatte (8) innerhalb des Behälters (21), die sich über die Breite des Behälters (2) vom Boden des Behälters (2) aus so erstreckt, dass sie auf einer Höhe unterhalb der Oberseite des Behälters (2) endet, wobei die Wehrplatte (8) den Behälter (2) in eine Einlass- und eine Auslasskammer (10, 12) unterteilt, eine aufrechte Steuerplatte (16), die in der Einlasskammer (10) angeordnet ist und sich über die Breite des Behälters (2) erstreckt, wobei das untere Ende der Steuerplatte (16) oberhalb des Bodens des Behälters (2) angeordnet ist, um einen Schlitz (18) zwischen der Steuerplatte (16) und dem Boden des Behälters (2) zu definieren, und sich das obere Ende der Steuerplatte (16) auf oder oberhalb der Höhe des oberen Endes der Wehrplatte (8) befindet, sowie eine Deckplatte (20), die den Teil der Einlasskammer (10) zur der Seite der Steuerplatte (16) hin bedeckt, die von der Wehrplatte (8) entfernt ist, wobei die Deckplatte (20) einen Scheitel innerhalb der Einlasskammer (10) aufweist, der unterhalb der Höhe des oberen Endes der Wehrplatte (8) angeordnet ist, und in ihr eine Öffnung ausgebildet ist, wobei der Separator weiters einen Einlass (4) zur Einlasskammer (10), der sich auf einer Höhe unterhalb der Deckplatte (20) befindet, einen Auslass (6) von der Auslasskammer (12), der sich auf einer Höhe unterhalb des oberen Endes der Wehrplatte (8) befindet, sowie ein Steigrohr (22) umfasst, das sich von der Öffnung in der Deckplatte (20) bis auf eine Höhe oberhalb jener des oberen Endes der Wehrplatte (8) erstreckt.

2. Separator nach Anspruch 1, der ein Einwegventil (28) im Steigrohr (22) umfasst, das so angeordnet ist, dass das Hindurchströmen der schwereren Flüssigkeit verhindert wird.

3. Separator nach Anspruch 2, bei dem das Ventil (28) ein Kugelventil ist, das einen Schwimmer (32) umfasst, der, wenn sich leichtere Flüssigkeit im Steigrohr (22) befindet, das Steigrohr (22) offen hält, und wenn sich schwerere Flüssigkeit im Steigrohr befindet, das Rohr (22) verschließt.

4. Separator nach einem der Ansprüche 1 bis 3, bei dem die Deckplatte (20) mit der Steuerplatte (16) einstückig ausgebildet oder daran befestigt ist, und im Querschnitt die Gestalt eines im Wesentlichen umgekehrten V aufweist, wobei sich der Scheitel des Querschnitts von einem Bereich, der an den Einlass (4) zur Einlasskammer (10) des Behälters (2) angrenzt, nach oben und in den Behälter (2) hinein zum Verbindungsbereich der Deckplatte (20) mit der Steuerplatte (16) hin erstreckt.

5. Separator nach Anspruch 4, bei dem die Öffnung in der Deckplatte (20) darin an oder angrenzend an ihren Verbindungsbereich mit der Steuerplatte (16) ausgebildet ist.

6. Separator nach einem der Ansprüche 1 bis 5, bei dem ein Auslassrohr (24) im Wesentlichen horizontal vom Steigrohr (22) auf einer Höhe oberhalb jener des oberen Endes der Wehrplatte (8) speist.

7. Separator nach einem der Ansprüche 1 bis 6, der einen Koaleszenzfilter in der Einlasskammer (10) unmittelbar stromauf vom Schlitz (18) zwischen der Steuerplatte (16) und dem Boden des Behälters (2) umfasst.

## Revendications

1. Séparateur pour des liquides immiscibles comprenant une cuve (2) et une plaque de barrage debout (8) dans la cuve (2) s'étendant sur la largeur de la cuve (2) à partir de la base de cuve (2) pour se terminer à un niveau en dessous du dessus de la cuve (2), la plaque de barrage (8) divisant la cuve (2) en des chambres d'entrée et de sortie (10,12), une plaque de réglage debout (16) située dans la chambre d'entrée (10) et s'étendant sur la largeur de la cuve (2), le fond de la plaque de réglage (16) se situant au-dessus de la base de la cuve (2) pour définir une fente (18) entre la plaque de réglage (16) et la base de la cuve (2), et le dessus de la plaque de réglage (16) se situant à ou au-dessus du niveau du dessus de la plaque de barrage (8), et une plaque supérieure (20) recouvrant cette partie de la chambre d'entrée (10) vers le côté de la plaque de réglage (16) éloigné de la plaque de barrage (8), ladite plaque supérieure (20) présentant un sommet dans la chambre d'entrée (10) positionnée en dessous du niveau du dessus de la plaque de barrage (8) et dans laquelle est formée une ouverture, le séparateur comprenant en outre une entrée (4) à la chambre d'entrée (10) positionnée à un niveau en dessous de la plaque supérieure (20), une sortie (6) de la chambre de sortie (12) positionnée à un niveau en dessous du dessus de la plaque de barrage (8), et un tube montant (22) s'étendant vers le haut à partir de l'ouverture dans la plaque supérieure (20) à un niveau au-dessus de celui du dessus de la plaque de barrage (8).

2. Séparateur selon la revendication 1, et comprenant une vanne à une voie (28) dans le tube montant (22) agencée pour empêcher un écoulement du liquide plus lourd à travers celui-ci.

3. Séparateur selon la revendication 2, où la vanne (28) est une vanne à boisseau sphérique incorporant un flotteur (32) qui, lors d'un liquide plus léger dans le tube montant (22), maintient ledit tube montant (22) ouvert et, lors d'un liquide plus lourd dans le tube montant, ferme ledit tube (22).

4. Séparateur selon l'une des revendications 1 à 3, où la plaque supérieure (20) est intégrale avec ou fixée à la plaque de réglage (16) et a une forme de V généralement inversé en section transversale, le sommet de la section s'étendant vers le haut et vers l'intérieur de la cuve (2) à partir d'une région adjacente à l'entrée (4) à la chambre d'entrée (10) de la cuve (2) à la région d'intégration de la plaque supérieure (20) avec la plaque de réglage (16).

5. Séparateur selon la revendication 4, où l'ouverture dans la plaque supérieure (20) est formée dans celle-ci à ou d'une manière adjacente à sa région d'intégration avec la plaque de réglage (16).

6. Séparateur selon l'une des revendications 1 à 5, où un tuyau de sortie (24) alimente sensiblement horizontalement à partir du tube montant (22) à un niveau au-dessus de celui du dessus de la plaque de barrage (8).

7. Séparateur selon l'une des revendications 1 à 6, et comportant un filtre coalescent dans la chambre d'entrée (10) directement en amont de la fente (18) entre la plaque de réglage (16) et la base de la cuve (2).
